# EUROPEAN PATENT SPECIFICATION

(11) **EP 3 214 149 B1**
(45) Date of publication and mention of the grant of the patent: **18.09.2024**
(21) Application number: 15855869.2
(22) Date of filing: 27.10.2015
(51) Int. Cl.: C08L 91/00, C08K 3/26, C09K 3/10

(54) **SEALANT COMPOSITION**
DICHTUNGSMITTELZUSAMMENSETZUNG
COMPOSITION DE MATÉRIAU D'ÉTANCHÉITÉ

(30) Priority: 28.10.2014 JP 2014219526
(43) Date of publication of application: 06.09.2017
(73) Proprietor: KURARAY CO., LTD., Kurashiki-shi, Okayama 710-0801 (JP); Amyris, Inc., Emeryville, CA 94608 (US)
(72) Inventor: KANBARA, Hiroshi, Kamisu-shi Ibaraki 314-0197 (JP); HIRATA, Kei, Kamisu-shi Ibaraki 314-0197 (JP)
(74) Representative: Müller-Boré & Partner Patentanwälte PartG mbB
(86) International application number: PCT/JP2015/080271
(87) International publication number: WO 2016/068141

(56) References cited:
- EP-A1- 2 818 507
- EP-A1- 3 081 613
- WO-A1-2013/125496
- WO-A1-2015/087954
- JP-A- 2012 502 135
- JP-A- 2012 502 136
- US-A1- 2010 056 714
- US-A1- 2013 123 379

## Description

### TECHNICAL FIELD

The present invention relates to a sealing material composition.

### BACKGROUND ART

As a method of filling a sealing material for an automobile vehicle body in mounting portions thereof, there may be mentioned such a method in which after subjecting a composition for the sealing material to extrusion molding, etc., to form the composition into a tape shape, the resulting molded tape of the composition is manually attached to the automobile vehicle body and then heated in a baking step after painting to vulcanize and foam the composition, so that the composition is filled in the mounting portions of the automobile vehicle body. However, the aforementioned method is manually conducted and therefore tends to suffer from filling defects in some cases.

In consequence, there has also been proposed such an alternative method in which the sealing material composition is formed into a paste-like material, and the paste-like material is mechanically applied to the mounting portions of the automobile vehicle body to enhance filling accuracy and working efficiency of the composition.

For example, PTL1 discloses a vulcanized sealing material containing a low-molecular weight rubber having a specific viscosity and a vulcanizing agent, and PTL2 discloses a sealing material composition containing a specific modified low-molecular weight polyisoprene rubber, a crosslinking agent and a filler.

In addition, PTL3 discloses a paste-type heat-foaming filler containing a liquid rubber, an unvulcanized rubber, a vulcanizing agent, a vulcanization accelerator, a softening agent, a foaming agent and a foaming assistant. PTL4 proposes a crosslinking rubber composition containing an epoxidated diene-based rubber, a solid rubber, a filler and a crosslinking agent.

A rubber composition comprising a rubber component, a farnesene polymer and silica is disclosed in PTL5.

### CITATION LIST

### PATENT LITERATURE

PTL1: JP 55-038856 A
PTL2: JP 55-133473 A
PTL3: JP 5-59345 A
PTL4: JP 2005-248022 A
PTL5: WO 2013/125496 A1

### SUMMARY OF INVENTION

### TECHNICAL PROBLEM

The sealing material compositions described in PTL1 to PTL4 have reduced viscosity and therefore exhibit excellent working efficiency and easily-curing properties, and further are excellent in adhesive properties to some extent. However, with respect to the adhesive properties, these sealing material compositions must be still improved.

The present invention has been made to solve the aforementioned conventional problems. An object of the present invention is to provide a sealing material composition that has low viscosity, excellent working efficiency and easily-curing properties, and furthermore is excellent in adhesive properties to portions to which the sealing material is to be attached or adhered.

### SOLUTION TO PROBLEM

As a result of extensive and intensive researches, the present inventors have found that a sealing material composition using a polymer of farnesene as a liquid rubber is excellent in the aforementioned respective properties, and can be suitably used in the applications of sealing materials. The present invention has been accomplished on the basis of the above finding.

That is, the present invention relates to a sealing material composition including 100 parts by mass of a polymer of farnesene (A) and from 110 to 800 parts by mass of a filler (B), wherein the polymer (A) is a homopolymer of β-farnesene or a copolymer comprising a monomer unit derived from β-farnesene, the bond structure included in the copolymer comprising a monomer unit derived from β-farnesene being a random type of bonds, wherein the polymer (A) is optionally modified with a functional group-containing modifier, and wherein the filler (B) is calcium carbonate.

### ADVANTAGEOUS EFFECTS OF INVENTION

According to the present invention, it is possible to provide a sealing material composition that has low viscosity, excellent working efficiency and easily-curing properties, and is excellent in adhesive properties to portions to which the sealing material is to be attached or adhered.

### DESCRIPTION OF EMBODIMENTS

### [Sealing Material Composition]

The sealing material composition of the present invention includes 100 parts by mass of a specific polymer of farnesene (A) and from 110 to 800 parts by mass of a specific filler (B), and has low viscosity, excellent working efficiency and easily-curing properties (hereinafter also referred to as "curing properties"), and furthermore is excellent in adhesive properties to portions to which the sealing material is to be attached or adhered.

The sealing material composition of the present invention is explained in detail below.

### <Polymer of Farnesene (A) >

The sealing material composition of the present invention includes a polymer of farnesene (A) (hereinafter also referred to merely as a "polymer (A)").

As a monomer for constituting the polymer (A), β-farnesene represented by the following formula (I) is used in the present invention. The polymer (A) may be obtained by polymerizing β-farnesene by the below-mentioned method. From the viewpoint of facilitating production of the polymer and improving working efficiency, curing properties and adhesion properties of the resulting composition, the polymer (A) is a homopolymer of β-farnesene or a copolymer containing a monomer unit derived from β-farnesene, preferably a homopolymer of β-farnesene.

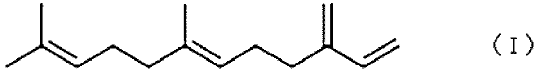

Meanwhile, the 1, 4-bond of the polymer (A) containing a monomer unit derived from β-farnesene as referred to in the present specification means a bond structure represented by the following formula (II). Also, the vinyl content as referred to in the present specification means a content of bond structures except for the 1, 4-bond among whole monomer units derived from β-farnesene, and may be measured by the method using ¹H-NMR.

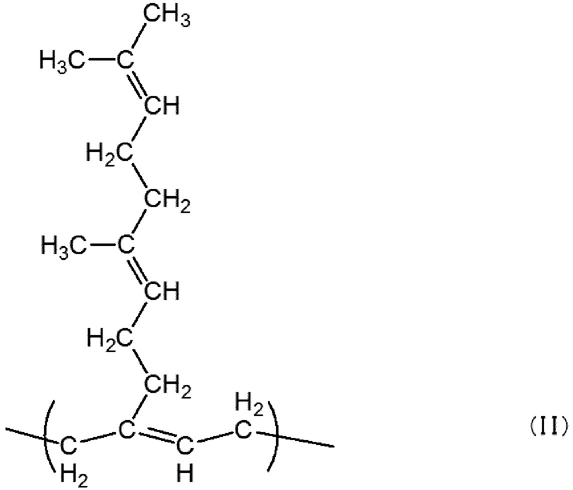

The polymer (A) may be in the form of a copolymer containing a monomer unit (a) derived from β-farnesene and a monomer unit (b) derived from a monomer other than β-farnesene.

In the case where the polymer (A) is in the form of a copolymer, examples of the monomer unit (b) derived from a monomer other than β-farnesene include monomer units derived from a conjugated diene having not more than 12 carbon atoms and an aromatic vinyl compound, etc.

Examples of the conjugated diene having not more than 12 carbon atoms include butadiene, isoprene, 2,3-dimethyl-butadiene, 2-phenyl-butadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene and chloroprene. Of these conjugated dienes, preferred are butadiene, isoprene and myrcene. These conjugated dienes may be used alone or in combination of any two or more thereof.

Examples of the aromatic vinyl compound include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene and divinylbenzene. Of these aromatic vinyl compounds, preferred are styrene, α-methylstyrene and 4-methylstyrene.

The proportion of the monomer unit (b) derived from a monomer other than β-farnesene to a sum of the monomer unit (a) derived from β-farnesene and the monomer unit (b) is preferably from 1 to 99% by mass, more preferably from 1 to 80% by mass, even more preferably from 1 to 70% by mass and further even more preferably from 1 to 55% by mass from the viewpoint of improving working efficiency, curing properties and adhesion properties of the resulting composition. In the case where the polymer (A) is in the form of a copolymer, the bond structure included in the copolymer may be any of a random type, a block type and other types of bonds.

The weight-average molecular weight (Mw) of the polymer (A) is preferably not less than 1,000, more preferably not less than 2,000, even more preferably not less than 5,000, further even more preferably not less than 15,000, still further even more preferably not less than 25,000, still further even more preferably not less than 30,000 and still further even more preferably not less than 35,000, and is also preferably not more than 500,000, more preferably not more than 400,000, even more preferably not more than 200,000, further even more preferably not more than 150,000 and still further even more preferably not more than 140,000.

More specifically, the weight-average molecular weight (Mw) of the polymer (A) is preferably from 1,000 to 500,000, more preferably from 2,000 to 400,000, even more preferably from 5,000 to 200,000, further even more preferably from 15,000 to 200,000 and still further even more preferably from 25,000 to 200,000.

When the weight-average molecular weight (Mw) of the polymer (A) falls within the aforementioned range, the resulting sealing material composition can be improved in working efficiency, curing properties and adhesive properties. Meanwhile, the weight-average molecular weight (Mw) of the polymer (A) as referred to in the present specification means the value measured by the method described in Examples below.

In the present invention, the two kinds of polymers (A) which are different in Mw from each other may be used in combination.

The melt viscosity of the polymer (A) as measured at 38°C is preferably not less than 0.1 Pa•s, more preferably not less than 1 Pa•s, even more preferably not less than 1.5 Pa•s, further even more preferably not less than 2 Pa•s, still further even more preferably not less than 3 Pa•s, still further even more preferably not less than 4 Pa•s, still further even more preferably not less than 5 Pa•s, still further even more preferably not less than 6 Pa•s, still further even more preferably not less than 7 Pa•s, still further even more preferably not less than 8 Pa • s, still further even more preferably not less than 9 Pa • s and still further even more preferably not less than 10 Pa•s, and is also preferably not more than 3,000 Pa•s, more preferably not more than 2,500 Pa•s, even more preferably not more than 2,000 Pa•s, further even more preferably not more than 1,500 Pa•s, still further even more preferably not more than 1,000 Pa•s, still further even more preferably not more than 600 Pa•s, still further even more preferably not more than 200 Pa•s, still further even more preferably not more than 100 Pa•s, still further even more preferably not more than 80 Pa•s and still further even more preferably not more than 70 Pa•s.

More specifically, the melt viscosity of the polymer (A) as measured at 38°C is preferably from 0.1 to 3,000 Pa•s, more preferably from 1 to 3,000 Pa•s, even more preferably from 1.5 to 2,500 Pa•s, further even more preferably from 2 to 2,000 Pa•s, still further even more preferably from 2 to 1,500 Pa•s, still further even more preferably from 2 to 1,000 Pa•s, still further even more preferably from 2 to 600 Pa•s and still further even more preferably from 2 to 200 Pa•s.

When the melt viscosity of the polymer (A) falls within the aforementioned range, the resulting sealing material composition can be improved in working efficiency, curing properties and adhesive properties. Meanwhile, the melt viscosity of the polymer (A) as referred to in the present specification means the value measured by the method described in Examples below.

The molecular weight distribution (Mw/Mn) of the polymer (A) is preferably from 1.0 to 8.0, more preferably from 1.0 to 5.0 and even more preferably from 1.0 to 3.0. When Mw/Mn of the polymer (A) falls within the aforementioned range, the resulting polymer (A) can more desirably exhibit less variation in viscosity thereof.

The glass transition temperature of the polymer (A) may vary depending upon a vinyl content or a content of a monomer used therein, and is preferably not lower than -100°C, more preferably not lower than -90°C, even more preferably not lower than -80°C and further even more preferably not lower than -75°C, and is also preferably not higher than 30°C, more preferably not higher than 20°C, even more preferably not higher than 10°C, further even more preferably not higher than 0°C, still further even more preferably not higher than -10°C, still further even more preferably not higher than -20°C, still further even more preferably not higher than -30°C and still further even more preferably not higher than -40°C.

More specifically, the glass transition temperature of the polymer (A) is preferably from -100 to 30°C, more preferably from -100 to 20°C, even more preferably from -100 to 10°C, further even more preferably from -100 to 0°C and still further even more preferably from -90 to -10°C. When the glass transition temperature of the polymer (A) falls within the aforementioned range, the resulting sealing material composition can be improved in working efficiency, curing properties, adhesive properties and flexibility.

In the present invention, the content of the polymer (A) in the sealing material composition is preferably not less than 1% by mass, more preferably not less than 2% by mass, even preferably not less than 3% by mass, further even preferably not less than 5% by mass, still further even preferably not less than 7% by mass, still further even preferably not less than 9% by mass, still further even preferably not less than 11% by mass, still further even preferably not less than 13% by mass and still further even preferably not less than 15% by mass, and is also preferably not more than 99% by mass, more preferably not more than 80% by mass, even more preferably not more than 70% by mass, further even more preferably not more than 60% by mass, still further even more preferably not more than 50% by mass, still further even more preferably not more than 40% by mass, still further even more preferably not more than 35% by mass and still further even more preferably not more than 30% by mass.

More specifically, the content of the polymer (A) in the sealing material composition is preferably from 1 to 99% by mass, more preferably from 2 to 80% by mass and even more preferably from 3 to 70% by mass. When the content of the polymer (A) in the sealing material composition falls within the aforementioned range, the resulting sealing material composition can be improved in working efficiency, curing properties and adhesive properties.

The polymer (A) may be produced by a bulk polymerization method, an emulsion polymerization method, the methods described in WO 2010/027463 A1 and WO 2010/027464 A1 or the like. Among these methods, preferred are a bulk polymerization method, an emulsion polymerization method and a solution polymerization method, and more preferred is a solution polymerization method.

### (Bulk Polymerization Method)

The bulk polymerization method may be selected from any suitable conventionally known methods. For example, the bulk polymerization method may be conducted by stirring and mixing a β-farnesene monomer, if required, together with the monomer other than β-farnesene, such as an aromatic vinyl compound and a conjugated diene, and then subjecting the resulting mixture to polymerization reaction in the presence of a radical polymerization initiator without using a solvent.

Examples of the radical polymerization initiator include an azo-based compound, a peroxide-based compound and a redox-based compound. Among these compounds, especially preferred are azobisisobutyronitrile, tert-butylperoxypivalate, di-tert-butylperoxide, i-butyryl peroxide, lauryl peroxide, succinic peroxide, dicinnamyl peroxide, di-n-propyl peroxydicarbonate, tert-butylperoxyallyl monocarbonate, benzoyl peroxide, hydrogen peroxide and ammonium persulfate.

The temperature used in the bulk polymerization may be appropriately determined according to the kind of radical polymerization initiator used, and is in general preferably from 0 to 200°C and more preferably from 0 to 120°C. The bulk polymerization may be conducted by either a continuous polymerization method or a batch polymerization method. The bulk polymerization reaction may be stopped by adding a terminating agent to the reaction system.

Examples of the terminating agent include amine compounds such as isopropyl hydroxyl amine, diethyl hydroxyl amine and hydroxyl amine; quinone-based compounds such as hydroquinone and benzoquinone; and sodium nitrite.

The remaining monomers may be removed from the resulting copolymer by the methods such as reprecipitation and heating distillation under reduced pressure.

### (Emulsion Polymerization Method)

The emulsion polymerization method for obtaining the polymer (A) may be selected from any suitable conventionally known emulsion polymerization methods. For example, a β-farnesene monomer is emulsified and dispersed, if required, together with the monomer other than β-farnesene, such as an aromatic vinyl compound and a conjugated diene, in the presence of an emulsifying agent, and then the resulting emulsion is subjected to emulsion polymerization using a radical polymerization initiator.

As the emulsifying agent, there may be used a long-chain fatty acid salt having not less than 10 carbon atoms or a rosinic acid salt. Specific examples of the emulsifying agent include potassium salts and sodium salts of fatty acids such as capric acid, lauric acid, myristic acid, palmitic acid, oleic acid and stearic acid.

As a dispersant for the above emulsion polymerization, water may be usually used. The dispersant may also contain a waster-soluble organic solvent such as methanol and ethanol unless the use of such an organic solvent has any adverse influence on stability upon the polymerization.

Examples of the radical polymerization initiator include persulfates such as ammonium persulfate and potassium persulfate, organic peroxides and hydrogen peroxide.

In order to suitably control a molecular weight of the obtained polymer (A), there may be used a chain transfer agent. Examples of the chain transfer agent include mercaptans such as tert-dodecyl mercaptan and n-dodecyl mercaptan; and carbon tetrachloride, thioglycolic acid, diterpene, terpinolene, γ-terpinene and an α-methylstyrene dimer.

The temperature used in the emulsion polymerization may be appropriately determined according to the kind of radical polymerization initiator used therein, and is in general preferably from 0 to 100°C and more preferably from 0 to 80°C. The emulsion polymerization may be conducted by either a continuous polymerization method or a batch polymerization method. The emulsion polymerization reaction may be stopped by adding a terminating agent to the reaction system.

Examples of the terminating agent include amine compounds such as isopropyl hydroxyl amine, diethyl hydroxyl amine and hydroxyl amine; quinone-based compounds such as hydroquinone and benzoquinone; and sodium nitrite.

After terminating the polymerization reaction, an antioxidant may be added to the reaction system, if required. Furthermore, after terminating the polymerization reaction, unreacted monomers may be removed from the resulting latex, if required. Thereafter, the obtained polymer (A) is coagulated by adding a salt such as sodium chloride, calcium chloride and potassium chloride as a coagulant thereto, if required, while adjusting a pH value of the coagulation system to a desired value by adding an acid such as nitric acid and sulfuric acid thereto, and then the dispersing solvent is separated from the resulting reaction solution to recover the polymer (A). The thus recovered polymer (A) is washed with water and dehydrated, and then dried to obtain the polymer (A). Meanwhile, upon coagulating the polymer (A), the latex may be previously mixed, if required, with an extender oil in the form of an emulsified dispersion to thereby recover the polymer (A) in the form of an oil-extended polymer (A).

### (Solution Polymerization Method)

The solution polymerization method for obtaining the polymer (A) may be selected from any suitable conventionally known solution polymerization methods. For example, a β-farnesene monomer is polymerized, if required, together with the monomer other than β-farnesene, such as an aromatic vinyl compound and a conjugated diene, in a solvent using a Ziegler-based catalyst, a metallocene-based catalyst or an anion-polymerizable active metal, if desired, in the presence of a polar compound.

Examples of the anion-polymerizable active metal include alkali metals such as lithium, sodium and potassium; alkali earth metals such as beryllium, magnesium, calcium, strontium and barium; and lanthanoid-based rare earth metals such as lanthanum and neodymium. Among these active metals, preferred are alkali metals and alkali earth metals, and more preferred are alkali metals. The alkali metals are preferably used in the form of an organic alkali metal compound.

Examples of the solvent include aliphatic hydrocarbons such as n-butane, n-pentane, isopentane, n-hexane, n-heptane and isooctane; alicyclic hydrocarbons such as cyclopentane, cyclohexane and methyl cyclopentane; and aromatic hydrocarbons such as benzene, toluene and xylene.

Specific examples of the organic alkali metal compound include organic monolithium compounds such as methyl lithium, ethyl lithium, n-butyl lithium, sec-butyl lithium, tert-butyl lithium, hexyl lithium, phenyl lithium and stilbene lithium; polyfunctional organic lithium compounds such as dilithiomethane, dilithionaphthalene, 1,4-dilithiobutane, 1,4-dilithio-2-ethyl cyclohexane and 1,3,5-trihthiobenzene; and sodium naphthalene and potassium naphthalene. Among these organic alkali metal compounds, preferred are organic lithium compounds, and more preferred are organic monolithium compounds. The amount of the organic alkali metal compound used may be appropriately determined according to a molecular weight of the polymer (A) as required, and is preferably from 0.01 to 3 parts by mass on the basis of 100 parts by mass of the monomer.

The organic alkali metal compound may also be allowed to react with a secondary amine such as dibutyl amine, dihexyl amine and dibenzyl amine to use the compound in the form of an organic alkali metal amide.

The polar compound is used in the solution polymerization in order to avoid deactivation of the reaction in the anion polymerization and control a microstructure of farnesene moieties. Examples of the polar compound include ether compounds such as dibutyl ether, tetrahydrofuran and ethylene glycol diethyl ether; tertiary amines such as tetramethyl ethylenediamine and trimethylamine; and alkali metal alkoxides and phosphine compounds. The polar compound is preferably used in an amount of from 0.01 to 1,000 mol equivalent on the basis of the organic alkali metal compound.

The temperature used in the solution polymerization is usually in the range of from -80 to 150°C, preferably from 0 to 100°C and more preferably from 10 to 90°C. The solution polymerization may be conducted by either a batch method or a continuous method.

The polymerization reaction may be stopped by adding an alcohol such as methanol and isopropanol as a terminating agent to the reaction system. The obtained polymerization reaction solution may be poured into a poor solvent such as methanol to precipitate the polymer (A), or the polymerization reaction solution may be washed with water, followed by separating water therefrom, and then the thus obtained reaction solution may be dried to thereby isolate the polymer (A) therefrom.

### (Modified Polymer)

The aforementioned polymer (A) may be modified with a functional group-containing modifier. Examples of the functional group of the modifier include an amino group, an amide group, an imino group, an imidazole group, a urea group, an alkoxysilyl group, a hydroxy group, an epoxy group, an ether group, a carboxy group, a carbonyl group, a mercapto group, an isocyanate group, a nitrile group and an acid anhydride group.

As the method of producing the modified polymer, there may be used, for example, the method in which before adding the terminating agent, a coupling agent such as tin tetrachloride, dibutyl tin chloride, tetrachlorosilane, dimethyl dichlorosilane, dimethyl diethoxysilane, tetramethoxysilane, tetraethoxysilane, 3-aminopropyl triethoxysilane, tetraglycidyl-1,3-bisaminomethyl cyclohexane and 2,4-tolylene diisocyanate which are capable of reacting with an active end of the polymer chain, a chain end-modifying agent such as 4,4'-bis(diethylamino)benzophenone, N-vinyl pyrrolidone, N-methyl pyrrolidone, 4-dimethylaminobenzylidene aniline and dimethyl imidazolidinone, or the other modifying agents as described in JP 2011-132298 A is added to the polymerization reaction system. Furthermore, the polymer (A) obtained after the isolation may be grafted with maleic anhydride, etc.

In the modified polymer, the site of the polymer into which the functional group is introduced may be either a chain end or a side chain of the polymer chain. In addition, the functional groups may be used alone or in combination of any two or more thereof. The modifier is preferably used in an amount of from 0.01 to 100 mol equivalent on the basis of the organic alkali metal compound.

### <Filler (B)>

The sealing material composition of the present invention contains a filler (B) for the purpose of improving mechanical strength as well as heat resistance and weather resistance of the resulting sealing material, and controlling hardness of the sealing material, and increasing volume of the composition, etc.

According to the present invention, the filler (B) is calcium carbonate. Calcium carbonate causes less increase in viscosity of the sealing material composition even when incorporating a large amount of calcium carbonate into the composition, and therefore it is possible to increase a content of calcium carbonate in the composition, so that the resulting sealing material can be further improved in heat resistance and weather resistance. As the calcium carbonate, there may be used those calcium carbonates generally used in the applications for the sealing material composition, such as soft calcium carbonate and heavy calcium carbonate.

The content of the filler (B) in the sealing material composition is from 110 to 800 parts by mass on the basis of 100 parts by mass of the polymer of farnesene (A). As the content of the filler (B) in the sealing material composition falls within the aforementioned range, the obtained composition can exhibit a reduced viscosity and can be improved in working efficiency, and the resulting sealing material can be improved in mechanical strength. In addition, it is possible to obtain such a sealing material composition that has excellent curing properties and is excellent in adhesive properties to portions to which the sealing material is to be attached or adhered.

In the present invention, the content of the filler (B) in the sealing material composition in the case where the below-mentioned solid rubber (C) is not contained in the composition is preferably not more than 500 parts by mass, more preferably not more than 350 parts by mass, even more preferably not more than 250 parts by mass, further even more preferably not more than 200 parts by mass and still further even more preferably not more than 180 parts by mass, on the basis of 100 parts by mass of the polymer (A), from the viewpoint of improving working efficiency and mechanical strength of the resulting sealing material composition.

On the other hand, in the present invention, the content of the filler (B) in the sealing material composition in the case where the below-mentioned solid rubber (C) is contained in the composition is preferably not less than 150 parts by mass, more preferably not less than 250 parts by mass, even more preferably not less than 350 parts by mass, further even more preferably not less than 400 parts by mass and still further even more preferably not less than 450 parts by mass, and is also preferably not more than 600 parts by mass, on the basis of 100 parts by mass of the polymer (A), from the viewpoint of improving working efficiency and mechanical strength of the resulting sealing material composition.

### <Solid Rubber (C)>

The sealing material composition of the present invention may also contain a solid rubber. When incorporating the solid rubber into the sealing material composition of the present invention, it is possible to facilitate control of hardness of the composition and further improve heat resistance and mechanical strength of the composition.

Meanwhile, the solid rubber as used in the present invention means a rubber that is kept not in a liquid state but in a solid state at ordinary temperatures, and usually has a Mooney viscosity (ML₁₊₄) of from 20 to 200 as measured at 100°C.

Examples of the preferred solid rubber usable in the present invention include at least one rubber selected from the group consisting of a natural rubber, a polyisoprene rubber, a polybutadiene rubber, a styrene-butadiene copolymer rubber, a styrene-isoprene copolymer rubber, an acrylonitrile-butadiene copolymer rubber, a chloroprene rubber, an ethylene-propylene rubber and a butyl rubber. Among these solid rubbers, more preferred are a polybutadiene rubber and a polyisoprene rubber.

In the case where the sealing material composition contains the solid rubber (C), the content of the solid rubber (C) in the sealing material composition is preferably not less than 1 part by mass, more preferably not less than 10 parts by mass, even more preferably not less than 20 parts by mass, further even more preferably not less than 30 parts by mass, still further even more preferably not less than 40 parts by mass and still further even more preferably not less than 50 parts by mass, and is also preferably not more than 900 parts by mass, more preferably not more than 400 parts by mass, even more preferably not more than 300 parts by mass, further even more preferably not more than 200 parts by mass, still further even more preferably not more than 100 parts by mass and still further even more preferably not more than 80 parts by mass, and more specifically is preferably from 1 to 900 parts by mass, more preferably from 10 to 400 parts by mass, even more preferably from 20 to 300 parts by mass and further even more preferably from 20 to 200 parts by mass, on the basis of 100 parts by mass of the polymer (A). When the content of the solid rubber (C) in the sealing material composition falls within the aforementioned range, it is possible to suppress increase in viscosity of the sealing material composition, so that the resulting composition can be improved in working efficiency.

### <Softening Agent (D)>

The sealing material composition of the present invention also preferably contains a softening agent for the purpose of improving working efficiency, processability, flowability or the like of the resulting sealing material composition. Examples of the softening agent (D) include a mineral oil, a vegetable oil and a synthetic oil.

Specific examples of the mineral oil include a paraffin-based oil, a naphthene-based oil and an aromatic oil.

Specific examples of the vegetable oil include a castor oil, a cotton seed oil, a linseed oil, a rapeseed oil, a soybean oil, a palm oil, a coconut oil and a peanut oil.

Specific examples of the synthetic oil include an ethylene-α-olefin oligomer and a liquid paraffin.

These softening agents (D) may be used alone or in combination of any two or more thereof. Among these softening agents (D), from the viewpoint of good compatibility with the polymer (A), preferred are a paraffin-based oil, a naphthene-based oil and an aromatic oil, and more preferred is a naphthene-based oil.

In the case where the sealing material composition of the present invention contains the softening agent (D), the content of the softening agent (D) in the sealing material composition is preferably from 1 to 2,000 parts by mass, more preferably from 5 to 1,000 parts by mass and even more preferably from 10 to 500 parts by mass on the basis of 100 parts by mass of the polymer (A).

### <Crosslinking Agent>

The sealing material composition of the present invention preferably contains a crosslinking agent. Examples of the crosslinking agent usable in the present invention include sulfur crosslinking agents such as sulfur, morpholine disulfide and alkyl phenol disulfides; and organic peroxide crosslinking agents such as cyclohexanone peroxide, methyl acetoacetate peroxide, t-butylperoxyisobutyrate, t-butylperoxybenzoate, benzoyl peroxide, lauroyl peroxide, dicumyl peroxide, d-t-butyl peroxide and 1,3-bis(t-butylperoxyisopropyl)benzene. These crosslinking agents may be used alone or in combination of any two or more thereof.

In the case where the sealing material composition of the present invention contains the crosslinking agent, the content of the crosslinking agent in the sealing material composition is preferably from 0.1 to 100 parts by mass, more preferably from 0.5 to 50 parts by mass and even more preferably from 1 to 30 parts by mass on the basis of 100 parts by mass of the polymer (A). When the content of the crosslinking agent in the sealing material composition falls within the aforementioned range, the resulting sealing material can be improved in mechanical strength and flexibility.

### <Crosslinking Accelerator>

The sealing material composition of the present invention may also contain a crosslinking accelerator, if required.

Examples of the crosslinking accelerator include thiuram-based accelerators such as tetramethyl thiuram monosulfide, tetramethyl thiuram disulfide and tetraethyl thiuram disulfide;
thiazole-based accelerators such as 2-mercapto-benzothiazole and di-2-benzothiazolyl disulfide;
sulfenamide-based accelerators such as N-cyclohexyl-2-benzothiazyl sulfenamide and N-oxydiethylene-2-benzothiazolyl sulfenamide;
guanidine-based accelerators such as diphenyl guanidine, di-o-tolyl guanidine and 1-o-tolyl biguanide;
aldehyde-amine-based accelerators such as an n-butyl aldehyde-aniline condensation product and a butyl aldehyde-monobutyl amine condensation product;
aldehyde-ammonia-based accelerators such as hexamethylene tetramine; and
thiourea-based accelerators such as thiocarbanilide.

These crosslinking accelerators may be used alone or in combination of any two or more thereof.

In the case where the sealing material composition of the present invention contains the crosslinking accelerator, the content of the crosslinking accelerator in the sealing material composition is preferably from 0.1 to 100 parts by mass, more preferably from 0.5 to 50 parts by mass and even more preferably from 1.0 to 30 parts by mass on the basis of 100 parts by mass of the polymer (A).

### <Crosslinking Aid>

The sealing material composition of the present invention may also contain a crosslinking aid, if required.

Examples of the crosslinking aid include metal oxides such as zinc oxide and magnesium oxide; metal hydroxides such as calcium hydroxide;
metal carbonates such as zinc carbonate and basic zinc carbonate;
fatty acids such as stearic acid and oleic acid; fatty acid metal salts such as zinc stearate and magnesium stearate;
amines such as di-n-butylamine and dicyclohexylamine; and
ethylene dimethacrylate, diallyl phthalate, N,N-m-phenylene dimaleimide, triallyl isocyanurate, trimethylol propane trimethacrylate, etc. These crosslinking aids may be used alone or in combination of any two or more thereof.

In the case where the sealing material composition of the present invention contains the crosslinking aid, the content of the crosslinking aid in the sealing material composition is preferably from 0.1 to 100 parts by mass, more preferably from 0.5 to 50 parts by mass and even more preferably from 1.0 to 30 parts by mass on the basis of 100 parts by mass of the polymer (A).

### <Foaming Agent>

The sealing material composition of the present invention may also contain a foaming agent, if required. Examples of the foaming agent include sodium carbonate, sodium bicarbonate, ammonium carbonate, ammonium bicarbonate, azodicarbonamide, azobisisobutyronitrile and barium azodicarboxylate. These foaming agents, if compounded in the composition, may be used alone or in combination of any two or more thereof.

### <Other Components>

The sealing material composition of the present invention may also contain, if required, various other components such as a tackifier, an anti-aging agent, an antioxidant, a scorch retarder, a silane coupling agent, a light stabilizer, an anti-fungus agent, a flame retardant, a pigment, a dispersant, etc., unless the properties of the sealing material composition of the present invention are adversely influenced.

### <Method of Producing Sealing Material Composition>

The method of producing the sealing material composition of the present invention is not particularly limited, and any suitable method may be used in the present invention as long as the aforementioned respective components are uniformly mixed with each other. Examples of an apparatus used for producing the sealing material composition include a closed kneader of a tangential type or a meshing type such as a kneader rudder, a Brabender, a Banbury mixer and an internal mixer, a single-screw extruder, a twin-screw extruder, a mixing roll, a roller or the like. The mixing may be conducted under reduced pressure or in a nitrogen atmosphere. It is preferred that the sealing material composition of the present invention is obtained by uniformly mixing the respective components as described above, and the resulting composition is stored in a closed container until use.

The sealing material composition of the present invention may be crosslinked, if required, after applying the composition to a substrate such as an oil surface steel plate to thereby obtain a crosslinked product of the composition. The crosslinking conditions may be appropriately determined according to the applications of the resulting crosslinked product, for example, the composition is crosslinked at a temperature of from 130 to 250°C for a period of from 10 to 60 minutes.

In the case where the sealing material composition of the present invention is used, for example, in an automobile production line, the sealing material composition is applied to desired portions of various members (for example, gaps between flanges of a plurality of frame members), and when subjecting a vehicle body to baking and drying in an electro-deposition process, the sealing material composition thus applied thereto is crosslinked by heat generated thereupon to thereby form the crosslinked product of the composition on the desired portions.

The sealing material composition of the present invention is excellent in working efficiency upon application of the composition, can exhibit excellent curing properties, adhesive properties and rubber elasticity after being crosslinked, and therefore can be suitably used, in particular, as a sealing material for automobile vehicle bodies and building materials.

### EXAMPLES

The present invention will be described in more detail below by referring to the following examples. It should be noted, however, that the following examples are only illustrative and not intended to limit the invention thereto.

The respective components used in the following Examples and Comparative Examples are as follows.

### <Polymer (A)>

Polyfarnesenes (A-1) and (A-2) produced in the below-mentioned Production Examples 1 and 2, respectively.

### <Polyisoprene and Polybutadiene (X)>

Polyisoprene (X-1) and Polybutadienes (X-2) and (X-3) produced in the below-mentioned Comparative Production Examples 1 to 3, respectively.

### <Filler (B)>

Calcium carbonate "HAKUENKA CCR" available from Shiraishi Calcium Kaisha, Ltd.

### <Solid rubber (C)>

Polybutadiene rubber "DIENE NF35R" available from Asahi Kasei Corporation (Mooney viscosity (ML₁₊₄) as measured at 100°C: 35)

### <Softening Agent (D)>

Naphthene oil "SUNTHENE250" available from Japan Sun Oil Company, Ltd.

### <Other Components>

### (Crosslinking Agent)

Sulfur "SULFUR FINE POWDER 200 MESH" available from Tsurumi Chemical Industry Co., Ltd.

### (Crosslinking Accelerator)

Crosslinking Accelerator (1): "NOCCELER DM" (di-2-benzothiazolyl disulfide) available from Ouchi Shinko Chemical Industrial Co., Ltd.
Crosslinking Accelerator (2): "NOCCELER BG" (1-o-tolyl biguanide) available from Ouchi Shinko Chemical Industrial Co., Ltd.

### (Crosslinking Aid)

Crosslinking Aid (1): Stearic acid: "LUNAC S-20" available from Kao Corporation
Crosslinking Aid (2): Zinc oxide: "Zinc Oxide No.1" available from Sakai Chemical Industry Co., Ltd.

### (Antioxidant)

"NOCRAC NS-6" (2,2'-methylenebis(4-methyl-6-tert-butyl phenol)) available from Ouchi Shinko Chemical Industrial Co., Ltd.

### <Production Examples>

### Production Example 1: Production of polyfarnesene (A-1)

A pressure reaction vessel previously purged with nitrogen and then dried was charged with 203 g of hexane as a solvent and 7.7 g of n-butyl lithium (in the form of a 17% by mass hexane solution) as an initiator. The contents of the reaction vessel were heated to 50°C, and 342 g of β-farnesene was added thereto and polymerized for 1 hour. The resulting polymerization reaction solution was treated with methanol and then washed with water. After separating water from the thus washed polymerization reaction solution, the resulting solution was dried at 70°C for 12 hours, thereby obtaining a polyfarnesene (A-1) having properties as shown in Table 1.

### Production Example 2: Production of polyfarnesene (A-2)

A pressure reaction vessel previously purged with nitrogen and then dried was charged with 274 g of hexane as a solvent and 1.2 g of n-butyl lithium (in the form of a 17% by mass hexane solution) as an initiator. The contents of the reaction vessel were heated to 50°C, and 272 g of β-farnesene was added thereto and polymerized for 1 hour. The resulting polymerization reaction solution was treated with methanol and then washed with water. After separating water from the thus washed polymerization reaction solution, the resulting solution was dried at 70°C for 12 hours, thereby obtaining a polyfarnesene (A-2) having properties as shown in Table 1.

### Comparative Production Example 1: Production of polyisoprene (X-1)

A pressure reaction vessel previously purged with nitrogen and then dried was charged with 600 g of hexane and 13.9 g of n-butyl lithium (in the form of a 17% by mass hexane solution). The contents of the reaction vessel were heated to 70°C, and 1,370 g of isoprene was added thereto and polymerized for 1 hour. The resulting polymerization reaction solution was mixed with methanol and then washed with water. After separating water from the thus washed polymerization reaction solution, the resulting solution was dried at 70°C for 12 hours, thereby obtaining a polyisoprene (X-1) having properties as shown in Table 1.

### Comparative Production Example 2: Production of polybutadiene (X-2)

A pressure reaction vessel previously purged with nitrogen and then dried was charged with 560 g of hexane and 14.6 g of n-butyl lithium (in the form of a 17% by mass hexane solution). The contents of the reaction vessel were heated to 70°C, and 560 g of butadiene was added thereto and polymerized for 1 hour. The resulting polymerization reaction solution was mixed with methanol and then washed with water. After separating water from the thus washed polymerization reaction solution, the resulting solution was dried at 70°C for 12 hours, thereby obtaining a polybutadiene (X-2) having properties as shown in Table 1.

### Comparative Production Example 3: Production of polybutadiene (X-3)

A pressure reaction vessel previously purged with nitrogen and then dried was charged with 600 g of hexane and 11.0 g of n-butyl lithium (in the form of a 17% by mass hexane solution). The contents of the reaction vessel were heated to 70°C, and 730 g of butadiene was added thereto and polymerized for 1 hour. The resulting polymerization reaction solution was mixed with methanol and then washed with water. After separating water from the thus washed polymerization reaction solution, the resulting solution was dried at 70°C for 12 hours, thereby obtaining a polybutadiene (X-3) having properties as shown in Table 1.

Meanwhile, the weight-average molecular weight (Mw), molecular weight distribution (Mw/Mn), glass transition temperature and melt viscosity of each of the polymer (A), polyisoprene and polybutadienes were measured by the following methods.

### (Method of Measuring Weight-Average Molecular Weight and Molecular Weight Distribution)

The weight-average molecular weight (Mw) and molecular weight distribution (Mw/Mn) of each of the polymer (A), polyisoprene and polybutadienes were measured by GPC (gel permeation chromatography) in terms of a molecular weight of polystyrene as a reference standard substance. The measuring devices and conditions are as follows.
- Apparatus: GPC device "GPC8020" available from Tosoh Corporation
- Separating column: "TSKgelG4000HXL" available from Tosoh Corporation
- Detector: "RI-8020" available from Tosoh Corporation
- Eluent: Tetrahydrofuran
- Eluent flow rate: 1.0 mL/min
- Sample concentration: 5 mg/10 mL
- Column temperature: 40°C

### (Method of Measuring Glass Transition Temperature)

Ten milligrams of each of the polymer (A), polyisoprene and polybutadienes were sampled in an aluminum pan, and a thermogram of the sample was measured at temperature rise rate of 10°C/minute by differential scanning calorimetry (DSC), and the value at a peak top observed in the DDSC curve was determined as a glass transition temperature of the respective polymers.

### (Method of Measuring Melt Viscosity)

The melt viscosity of each of the polymer (A), polyisoprene and polybutadienes was measured at 38°C using a Brookfield-type viscometer available from Brookfield Engineering Labs. Inc.

**TABLE 1**

| | Polymer | Weight-average molecular weight (x 10³) | Molecular weight distribution Mw/Mn | Glass transition temperature (°C) | Melt viscosity at 38°C (Pa•s) |
|---|---|---|---|---|---|
| Production Example 1 | Polyfarnesene A-1 | 37 | 1.2 | -73 | 6.5 |
| Production Example 2 | Polyfarnesene A-2 | 135 | 1.2 | -73 | 62 |
| Comparative Production Example 1 | Polyisoprene X-1 | 61 | 1.1 | -63 | 480 |
| Comparative Production Example 2 | Polybutadiene X-2 | 27 | 1.1 | -93 | 40 |
| Comparative Production Example 3 | Polybutadiene X-3 | 45 | 1.1 | -94 | 200 |

### Examples 1 to 4 and Comparative Examples 1 to 6

The polymer (A), filler (B), solid rubber (C), softening agent (D), crosslinking aid and anti-aging agent were charged at respective compounding ratios (part(s) by mass) shown in Tables 2 and 3 into a Brabender adjusted to a temperature of 60°C and kneaded together for 7 minutes. Then, after adding a crosslinking agent and a crosslinking accelerator to the Brabender, the obtained mixture was kneaded at 60°C for 3 minutes, thereby obtaining 60 g of a sealing material composition. The viscosity, curing properties and adhesive properties of the thus obtained sealing material composition were measured by the below-mentioned methods.

### (1) Viscosity

### • In the case of containing no solid rubber (C):

The melt viscosity of the sealing material composition was measured at 60°C using a Brookfield-type viscometer available from Brookfield Engineering Labs. Inc.

### •In the case of containing a solid rubber (C):

The complex viscosity of the sealing material composition was measured at 30°C at a frequency of 1 Hz in a strain amount of 10% using "ARES RDAIII" available from Rheometric Scientific Inc., and the value measured after the elapse of 10 minutes from initiation of the measurement was regarded as a viscosity of the composition.

The values of Examples 1 and 2 and Comparative Examples 2 and 3 were relative values assuming that the value of Comparative Example 1 was 100. Also, the values of Examples 3 and 4 and Comparative Examples 5 and 6 were relative values assuming that the value of Comparative Example 4 was 100. Meanwhile, as the value is reduced, the working efficiency of the sealing material composition becomes more excellent.

### (2) Curing Properties

The obtained respective sealing material compositions were heated and cured in a metal mold having a size of 50 mm in length x 80 mm in width x 2 mm in thickness at 150°C for 30 minutes, and the surface of the resulting cured product was touched with fingers to evaluate curing properties thereof according to the following ratings.

### <Evaluation Ratings for Curing Properties>

1: The surface was cured and had no stickiness.
2: The surface was uncured and had stickiness.

### (3) Adhesive Properties (Rate of Retention of Shear Adhesive Strength)

The shear adhesive strength was measured according to JIS K 6850. As a steel plate for tests, there was used a 1 mm-thick SPCC-SD steel plate prescribed in JIS G 3141 which was coated with a rust preventive. The sealing material composition was applied onto the steel plate such that the obtained coating film of the composition had a thickness of 1 mm, and cured at 150°C for 30 minutes to prepare a test specimen. The thus prepared test specimen was allowed to stand under the conditions of 23°C and 50% RH for 24 hours, and then measured for a shear adhesive strength thereof. The measurement of the shear adhesive strength of the test specimen was conducted at an elastic stress rate of 50 mm/minute.

The values of Examples 1 and 2 and Comparative Examples 2 and 3 were relative values assuming that the value of Comparative Example 1 was 100. Also, the values of Examples 3 and 4 and Comparative Examples 5 and 6 were relative values assuming that the value of Comparative Example 4 was 100. Meanwhile, as the value is increased, the adhesive properties of the sealing material composition becomes higher.

**TABLE 2**

| | | Examples | | Comparative Examples | | |
|---|---|---|---|---|---|---|
| | | 1 | 2 | 1 | 2 | 3 |
| Compounding ratios (part(s) by mass) | | | | | | |
| Component (A) | A-1 | 100 | | | | |
| | A-2 | | 100 | | | |
| Component (X) | X-1 | | | 100 | | |
| | X-2 | | | | 100 | |
| | X-3 | | | | | 100 |
| Component (B) | Calcium carbonate | 150 | 150 | 150 | 150 | 150 |
| Component (D) | Naphthene oil | 100 | 100 | 100 | 100 | 100 |
| Other components | Crosslinking agent (sulfur) | 5 | 5 | 5 | 5 | 5 |
| | Crosslinking accelerator (1) | 3 | 3 | 3 | 3 | 3 |
| | Crosslinking accelerator (2) | 2 | 2 | 2 | 2 | 2 |
| | Crosslinking aid (1) | 1 | 1 | 1 | 1 | 1 |
| | Crosslinking aid (2) | 3 | 3 | 3 | 3 | 3 |
| | Antioxidant | 1 | 1 | 1 | 1 | 1 |
| Content of component (A) (% by mass) | | 27.4 | 27.4 | 0 | 0 | 0 |
| Amount of component (B) based on 100 parts by mass of component (A) (part(s) by mass) | | 150 | 150 | - | - | - |
| Evaluation | Viscosity (relative value) | 2 | 19 | 100 | 16 | 71 |
| | Curing properties | 1 | 1 | 1 | 2 | 2 |
| | Adhesive properties (relative value) | 98 | 106 | 100 | 95 | 105 |

From the comparison between Examples 1 and 2 and Comparative Examples 1 to 3, it was confirmed that the sealing material compositions obtained by using the polyfarnesene exhibited low viscosity as well as good working efficiency and curing properties, and were excellent in adhesive properties.

**TABLE 3**

| | | Examples | | Comparative Examples | | |
|---|---|---|---|---|---|---|
| | | 3 | 4 | 4 | 5 | 6 |
| Compounding ratios (part(s) by mass) | | | | | | |
| Component (A) | A-1 | 60 | | | | |
| | A-2 | | 60 | | | |
| Component (X) | X-1 | | | 60 | | |
| | X-2 | | | | 60 | |
| | X-3 | | | | | 60 |
| Component (B) | Calcium carbonate | 300 | 300 | 300 | 300 | 300 |
| Component (C) | Polybutadiene rubber | 40 | 40 | 40 | 40 | 40 |
| Component (D) | Naphthene oil | 100 | 100 | 100 | 100 | 100 |
| Other components | Crosslinking agent (sulfur) | 5 | 5 | 5 | 5 | 5 |
| | Crosslinking accelerator (1) | 3 | 3 | 3 | 3 | 3 |
| | Crosslinking accelerator (2) | 2 | 2 | 2 | 2 | 2 |
| | Crosslinking aid (1) | 1 | 1 | 1 | 1 | 1 |
| | Crosslinking aid (2) | 3 | 3 | 3 | 3 | 3 |
| | Antioxidant | 1 | 1 | 1 | 1 | 1 |
| Content of component (A) (% by mass) | | 11.7 | 11.7 | 0 | 0 | 0 |
| Amount of component (B) based on 100 parts by mass of component (A) (part(s) by mass) | | 500 | 500 | - | - | - |
| Evaluation | Viscosity (relative value) | 36 | 59 | 100 | 52 | 73 |
| | Curing properties | 1 | 1 | 1 | 2 | 2 |
| | Adhesive properties (relative value) | 101 | 105 | 100 | 94 | 103 |

From the comparison between Examples 3 and 4 and Comparative Examples 4 to 6, it was confirmed that the sealing material compositions obtained by using the polyfarnesene exhibited low viscosity as well as good working efficiency and curing properties, and were excellent in adhesive properties.

## Claims

1. A sealing material composition comprising 100 parts by mass of a polymer of farnesene (A) and from 110 to 800 parts by mass of a filler (B), wherein the polymer (A) is a homopolymer of β-farnesene or a copolymer comprising a monomer unit derived from β-farnesene, the bond structure included in the copolymer comprising a monomer unit derived from β-farnesene being a random type of bonds, wherein the polymer (A) is optionally modified with a functional group-containing modifier, and wherein the filler (B) is calcium carbonate.

2. The sealing material composition according to claim 1, wherein the copolymer comprising a monomer unit derived from β-farnesene contains, as a monomer unit derived from a monomer other than β-farnesene, a monomer unit derived from a conjugated diene having not more than 12 carbon atoms.

3. The sealing material composition according to claim 1 or 2, wherein the polymer (A) has a weight-average molecular weight of from 1,000 to 500,000.

4. The sealing material composition according to any one of claims 1 to 3, wherein the polymer (A) has a melt viscosity of from 0.1 to 3,000 Pa·s as measured at 38°C.

5. The sealing material composition according to any one of claims 1 to 4, further comprising at least one solid rubber (C) selected from the group consisting of a natural rubber, a polyisoprene rubber, a polybutadiene rubber, a styrene-butadiene copolymer rubber, a styrene-isoprene copolymer rubber, an acrylonitrile-butadiene copolymer rubber, a chloroprene rubber, an ethylene-propylene rubber and a butyl rubber.

6. The sealing material composition according to claim 5, wherein a content of the solid rubber (C) in the composition is from 1 to 900 parts by mass on the basis of 100 parts by mass of the polymer (A).

7. The sealing material composition according to any one of claims 1 to 6, further comprising at least one softening agent (D) selected from the group consisting of a mineral oil, a vegetable oil and a synthetic oil.

8. The sealing material composition according to claim 7, wherein the sealing material composition comprises a mineral oil as the softening agent (D), the mineral oil being a naphthene-based oil.

9. The sealing material composition according to claim 7 or 8, wherein a content of the softening agent (D) in the composition is from 1 to 2,000 parts by mass on the basis of 100 parts by mass of the polymer (A).

## Patentansprüche

1. Dichtungsmaterialzusammensetzung, umfassend 100 Masseteile eines Polymers von Farnesen (A) und 110 bis 800 Masseteile eines Füllstoffs (B), wobei das Polymer (A) ein Homopolymer von β-Farnesen oder ein Copolymer, umfassend eine Monomereinheit, abgeleitet von β-Farnesen, ist, wobei die Bindungsstruktur, eingeschlossen in dem Copolymer, umfassend eine Monomereinheit, abgeleitet von β-Farnesen, eine statistische Art von Bindungen ist, wobei das Polymer (A) gegebenenfalls mit einem Modifikator, enthaltend eine funktionelle Gruppe, modifiziert ist, und wobei der Füllstoff (B) Calciumcarbonat ist.

2. Dichtungsmaterialzusammensetzung nach Anspruch 1, wobei das Copolymer, umfassend eine Monomereinheit, abgeleitet von β-Farnesen, als eine Monomereinheit, abgeleitet von einem anderen Monomer als β-Farnesen, eine Monomereinheit, abgeleitet von einem konjugierten Dien mit nicht mehr als 12 Kohlenstoffatomen, enthält.

3. Dichtungsmaterialzusammensetzung nach Anspruch 1 oder 2, wobei das Polymer (A) ein gewichtsgemitteltes Molekulargewicht von 1000 bis 500000 aufweist.

4. Dichtungsmaterialzusammensetzung nach einem der Ansprüche 1 bis 3, wobei das Polymer (A) eine Schmelzviskosität von 0,1 bis 3000 Pa s, gemessen bei 38°C, aufweist.

5. Dichtungsmaterialzusammensetzung nach einem der Ansprüche 1 bis 4, weiter umfassend mindestens einen Festkautschuk (C), ausgewählt aus der Gruppe, bestehend aus einem Naturkautschuk, einem Polyisopren-Kautschuk, einem Polybutadien-Kautschuk, einem Styrol-Butadien-Copolymer-Kautschuk, einem Styrol-Isopren-Copolymer-Kautschuk, einem Acrylnitril-Butadien-Copolymer-Kautschuk, einem Chloropren-Kautschuk, einem Ethylen-Propylen-Kautschuk und einem Butyl-Kautschuk.

6. Dichtungsmaterialzusammensetzung nach Anspruch 5, wobei ein Gehalt des Festkautschuks (C) in der Zusammensetzung von 1 bis 900 Masseteile, bezogen auf 100 Masseteile des Polymers (A), beträgt.

7. Dichtungsmaterialzusammensetzung nach einem der Ansprüche 1 bis 6, weiter umfassend mindestens einen Weichmacher (D), ausgewählt aus der Gruppe, bestehend aus einem Mineralöl, einem Pflanzenöl und einem synthetischen Öl.

8. Dichtungsmaterialzusammensetzung nach Anspruch 7, wobei die Dichtungsmaterialzusammensetzung ein Mineralöl als den Weichmacher (D) umfasst, wobei das Mineralöl ein Öl auf Naphthenbasis ist.

9. Dichtungsmaterialzusammensetzung nach Anspruch 7 oder 8, wobei ein Gehalt des Weichmachers (D) in der Zusammensetzung von 1 bis 2000 Masseteile, bezogen auf 100 Masseteile des Polymers (A), beträgt.

## Revendications

1. Composition de matériau d'étanchéité comprenant 100 parties en masse d'un polymère de farnésène (A) et de 110 à 800 parties en masse d'une charge (B), dans laquelle le polymère (A) est un homopolymère de β-farnésène ou un copolymère comprenant une unité monomère dérivée de β-farnésène, la structure de liaisons incluse dans le copolymère comprenant une unité monomère dérivée de β-farnésène étant un type aléatoire de liaisons, dans laquelle le polymère (A) est en option modifié avec un modificateur contenant un groupe fonctionnel, et dans laquelle la charge (B) est du carbonate de calcium.

2. Composition de matériau d'étanchéité selon la revendication 1, dans laquelle le copolymère comprenant une unité monomère dérivée de β-farnésène contient, en tant qu'unité monomère dérivée d'un monomère autre que le β-farnésène, une unité monomère dérivée d'un diène conjugué n'ayant pas plus de 12 atomes de carbone.

3. Composition de matériau d'étanchéité selon la revendication 1 ou 2, dans laquelle le polymère (A) a un poids moléculaire moyen en poids allant de 1000 à 500000.

4. Composition de matériau d'étanchéité selon l'une quelconque des revendications 1 à 3, dans laquelle le polymère (A) a une viscosité à l'état fondu allant de 0,1 à 3000 Pa·s telle que mesurée à 38 °C.

5. Composition de matériau d'étanchéité selon l'une quelconque des revendications 1 à 4, comprenant en outre au moins un caoutchouc solide (C) sélectionné parmi le groupe constitué d'un caoutchouc naturel, d'un caoutchouc de polyisoprène, d'un caoutchouc de polybutadiène, d'un caoutchouc de copolymère de styrène-butadiène, d'un caoutchouc de copolymère de styrène-isoprène, d'un caoutchouc de copolymère d'acrylonitrile-butadiène, d'un caoutchouc de chloroprène, d'un caoutchouc d'éthylène-propylène et d'un caoutchouc butylique.

6. Composition de matériau d'étanchéité selon la revendication 5, dans laquelle une teneur en le caoutchouc solide (C) dans la composition va de 1 à 900 parties en masse sur la base de 100 parties en masse du polymère (A).

7. Composition de matériau d'étanchéité selon l'une quelconque des revendications 1 à 6, comprenant en outre au moins un agent d'adoucissage (D) sélectionné parmi le groupe constitué d'une huile minérale, d'une huile végétale et d'une huile synthétique.

8. Composition de matériau d'étanchéité selon la revendication 7, dans laquelle la composition de matériau d'étanchéité comprend une huile minérale en tant qu'agent d'adoucissage (D), l'huile minérale étant une huile à base de naphtène.

9. Composition de matériau d'étanchéité selon la revendication 7 ou 8, dans laquelle une teneur en l'agent d'adoucissage (D) dans la composition va de 1 à 2000 parties en masse sur la base de 100 parties en masse du polymère (A).
